# FASCICULE DE BREVET EUROPEEN

(11) **EP 1 621 953 B1**
(45) Date de publication et mention de la délivrance du brevet: **15.10.2008**
(21) Numéro de dépôt: 05291555.0
(22) Date de dépôt: 20.07.2005
(51) Int. Cl.: G05G 5/06, H01H 19/10

(54) **Moyen de commande de frein de stationnement électrique permettant d'ajuster le niveau de serrage**
Bedienvorrichtung einer elektrischen Feststellbremse zur Bremskraftanpassung
Electric parking brake command device enabling brake force adjustment

(30) Priorité: 26.07.2004 FR 0408232
(43) Date de publication de la demande: 01.02.2006
(73) Titulaire: Peugeot Citroën Automobiles SA, 78140 Vélizy-Villacoublay (FR)
(72) Inventeur: Bez, Simon, 92160 Antony (FR)

(56) Documents cités:
- DE-A1- 4 129 919
- DE-A1- 19 718 679
- DE-A1- 19 800 643
- FR-A- 2 769 126
- FR-A- 2 819 767
- RU-C1- 2 130 664
- US-B1- 6 380 733

## Description

L'invention concerne un moyen de commande de frein de stationnement électrique de véhicule automobile, comprenant un organe mobile par rapport à un socle, ce moyen de commande pilotant un actionneur électrique apte à appliquer un effort de freinage à un ou plusieurs récepteurs de freinage tels que des freins à disque ou à tambour, éventuellement via des câbles.

Un tel moyen de commande de frein est connu du document DE-A-19 718 679.

De façon générale, un frein de stationnement est un dispositif de commande parallèle à la commande hydraulique de frein principal, il comprend notamment des câbles transmettant un effort de serrage vers des récepteurs de freins intégrant une commande mécanique parallèle à la commande hydraulique.

Les freins de stationnement classiques, dits "frein à main" comprennent une palette, ou poignée, solidaire en rotation d'une poulie, en association avec un câble de frein qui s'enroule sur cette poulie.

Le choix du niveau d'effort de freinage est réalisé par l'utilisateur qui perçoit directement l'effort qu'il applique au câble de frein lorsqu'il tire sur la palette.

Un dispositif à cliquet réalise le blocage en position serrée de l'ensemble constitué par la palette et la poulie. Ce dispositif comprend un cliquet escamotable, solidaire de la poulie, qui est apte à dépasser de celle-ci pour la bloquer en s'engageant dans une denture correspondante solidaire d'une partie fixe du véhicule.

Le cliquet est maintenu en position sortie par un ressort et peut être escamoté par l'utilisateur au moyen d'un bouton de déblocage qui agit sur le cliquet, à l'encontre du ressort.

L'évolution actuelle conduit à des freins de stationnement électriques, c'est-à-dire dans lesquels l'action de l'utilisateur sur la palette sollicite un actionneur électrique qui génère l'effort appliqué aux câbles de freins. L'utilisateur n'a ainsi pas à générer lui-même l'effort de serrage, comme dans les freins à main.

Les freins de stationnement électriques actuels sont commandés au moyen d'un interrupteur électrique du type bouton poussoir, que l'utilisateur enfonce pour activer le frein de stationnement. Une carte électronique située entre la palette et l'actionneur électrique pilote cet actionneur pour qu'il applique aux câbles de freins un effort ayant une intensité adaptée à la situation dans laquelle se trouve le véhicule.

Cette carte électronique est relativement évoluée ; elle inclut un calculateur qui prend en compte différents paramètres, notamment pour détecter et identifier les situations critiques afin de doser en conséquence l'effort de freinage. De telles situations critiques sont par exemple un démarrage en côte ou un freinage avec le frein de stationnement alors que le véhicule roule.

Le calculateur ne connaît pas nécessairement tous les paramètres permettant d'identifier avec précision les différentes situations critiques pouvant se présenter. Par conséquent, l'effort de freinage appliqué par l'actionneur n'est pas toujours dosé de manière appropriée.

Le but de l'invention est de proposer une commande de frein de stationnement électrique permettant un dosage approprié de l'effort de freinage et d'un fonctionnement sûr.

A cet effet, l'invention a pour objet un moyen de commande de frein de stationnement électrique de véhicule automobile, comprenant un organe mobile par rapport à un socle, ce moyen de commande pilotant un actionneur électrique apte à appliquer un effort de freinage à un ou plusieurs récepteurs de freinage tels que des freins à disque ou à tambour, éventuellement via des câbles de frein, caractérisé en ce que l'organe mobile qui peut être déplacé par un utilisateur peut être immobilisé dans différentes positions, et en ce que ce moyen de commande pilote l'actionneur électrique pour qu'il applique à chaque récepteur de freinage un effort de freinage ayant une valeur qui correspond à la position de l'organe mobile, le moyen de commande comprenant une roue libre coopérant avec l'organe mobile et des moyens de blocage aptes à bloquer la roue libre lorsque le contact du véhicule est éteint pour interdire toute manipulation de l'organe mobile qui tendrait à diminuer l'effort de freinage appliqué aux récepteurs.

Selon une caractéristique de l'invention, l'organe mobile est un bouton rotatif pouvant occuper différentes positions angulaires.

Selon une autre caractéristique de l'invention, le bouton rotatif est lié en mouvement à deux capteurs de déplacement redondants aptes chacun à identifier la position angulaire du bouton rotatif.

Selon une autre caractéristique de l'invention, le moyen de commande comprend un système d'indexation apte à immobiliser le bouton rotatif dans différentes positions angulaires prédéterminées.

Selon une autre caractéristique de l'invention, le socle comprend un chemin de came ayant une forme générale d'arc de spirale et entourant une partie du bouton rotatif, le bouton rotatif comprend un pion apte à coulisser dans un logement, et ce pion a une extrémité maintenue en appui contre le chemin de came par un ressort situé en fond du logement.

Selon une autre caractéristique de l'invention, le bouton rotatif comprend un chemin de came ayant une forme générale d'arc de spirale, le socle comprend un pion apte à coulisser radialement dans un logement, et ce pion a une extrémité maintenue en appui contre le chemin de came par un ressort situé en fond du logement.

Selon une autre caractéristique de l'invention, le chemin de came a une forme générale d'arc de spirale et comprend des creux ou renfoncements successifs qui correspondent chacun à une position d'indexation.

Selon une autre caractéristique de l'invention, le bouton rotatif peut être déplacé par l'utilisateur au-delà d'une dernière position d'indexation prédéterminée, sans pouvoir être immobilisé au-delà de cette dernière position d'indexation prédéterminée.

Selon une autre caractéristique de l'invention, le bouton rotatif est mobile en rotation à l'encontre d'un ressort de rappel, ce bouton rotatif étant aussi mobile en translation le long de l'axe autour duquel il peut tourner, entre une position tirée et une position poussée, ce bouton rotatif et le socle comprennent chacun un aimant circulaire, ces deux aimants circulaires sont polarisés pour s'attirer mutuellement, ces deux aimants circulaires venant en contact l'un avec l'autre lorsque le bouton rotatif est tiré, ces deux aimants circulaires ont une surface de contact présentant un coefficient de frottement suffisamment élevé pour maintenir le bouton rotatif en position à l'encontre du ressort de rappel lorsque ce bouton rotatif est tiré.

Selon une autre caractéristique de l'invention, le moyen de commande comprend une palette rotative liée en mouvement au bouton rotatif.

Selon une autre caractéristique de l'invention, l'organe mobile est un levier pouvant être déplacé linéairement entre plusieurs positions.

Selon une autre caractéristique de l'invention, le levier est lié en mouvement à un ou plusieurs capteurs de déplacement apte à identifier la position linéaire du levier.

Selon une autre caractéristique de l'invention, le moyen de commande comprend un système d'indexation apte à immobiliser le levier dans différentes positions prédéterminées.

Selon une autre caractéristique de l'invention, le moyen de commande selon l'une des revendications précédentes, comprenant un socle incluant une rainure longitudinale dans laquelle peut coulisser le levier à l'encontre d'un ressort de rappel, cette rainure longitudinale comprenant plusieurs échancrures latérales correspondant chacune à une position indexée, et dans lequel le levier est également mobile latéralement pour pouvoir être engagé dans une échancrure de manière à être bloqué dans une position indexée.

Selon une autre caractéristique de l'invention, le levier peut être déplacé par l'utilisateur au-delà d'une dernière position d'indexation prédéterminée, sans pouvoir être immobilisé au-delà de cette dernière position d'indexation prédéterminée.

Selon une autre caractéristique de l'invention, le levier est mobile latéralement par rapport à la rainure, entre une position sensiblement verticale et une position rabattue, ce levier et le socle comprennent chacun un aimant, ces deux aimants étant polarisés pour s'attirer mutuellement, ces deux aimants viennent en contact l'un avec l'autre lorsque le levier est rabattu, ces deux aimants ont des surfaces de contact mutuelles présentant un coefficient de frottement suffisamment élevé pour maintenir le levier en position à l'encontre du ressort de rappel lorsque ce levier est rabattu.

Selon une autre caractéristique de l'invention, les moyens de blocage incluent un pion basculant, un ressort tendant à maintenir ce pion engagé dans une denture externe de la roue libre pour la bloquer, et un électroaimant apte à agir sur le pion basculant à l'encontre du ressort pour débloquer la roue libre en désengageant l'extrémité du pion de sa denture externe uniquement lorsque le contact du véhicule est enclenché.

Selon une autre caractéristique de l'invention, la roue libre comprend un moyeu solidaire de l'organe mobile, l'organe mobile pouvant tourner dans le sens de diminution de l'effort de freinage appliqué aux récepteurs, uniquement lorsque la roue libre est débloquée.

Selon une autre caractéristique de l'invention, la roue libre comprend un moyeu solidaire en rotation avec une roue dentée engagée dans une crémaillère solidaire en translation avec l'organe mobile et s'étendant selon la direction de déplacement de cet organe, la crémaillère pouvant se déplacer dans le sens de diminution de l'effort de freinage appliqué aux récepteurs, uniquement lorsque la roue libre est débloquée.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant plusieurs aspects de l'invention et dans lesquels :
- La figure 1 est une vue de face d'un premier mode de réalisation de l'organe mobile selon l'invention ;
- La figure 2 est une vue en coupe de l'organe mobile de la figure 1 ;
- La figure 3 est un diagramme montrant la relation entre l'effort et la position de l'organe mobile ;
- La figure 4 est une vue de face d'un second mode de réalisation de l'organe mobile selon l'invention ;
- La figure 5 est un autre diagramme montrant la relation entre l'effort et la position de l'organe mobile ;
- La figure 6 est une vue d'un troisième mode de réalisation de l'organe mobile selon l'invention ;
- La figure 7 est une vue d'un quatrième mode de réalisation de l'organe mobile selon l'invention ;
- La figure 8 est une vue de face d'un cinquième mode de réalisation de l'organe mobile selon l'invention ;
- La figure 9 est une vue en coupe de l'organe mobile du cinquième mode de réalisation ;
- La figure 10 est un diagramme montrant la relation entre l'effort et la position de l'organe mobile dans le cas du cinquième mode de réalisation ;
- La figure 11 est une vue de dessus d'un sixième mode de réalisation de l'organe mobile selon l'invention ;
- La figure 12 est une vue en coupe de l'organe mobile selon le sixième mode de réalisation de l'invention ;
- La figure 13 est une vue de dessus de l'organe mobile selon un septième mode de réalisation de l'invention ;
- La figure 14 est une vue de dessus de l'organe mobile selon un huitième mode de réalisation de l'invention ;
- La figure 15 est une vue de dessus d'un neuvième mode de réalisation de l'organe mobile selon l'invention ;
- La figure 16 est une vue en coupe de l'organe mobile selon le neuvième mode de réalisation de l'invention ;
- La figure 17 montre un premier dispositif additionnel de sécurité selon la revendication 1 ; et
- La figure 18 montre un second dispositif additionnel de sécurité.

L'idée à la base de l'invention est de prévoir un moyen de commande permettant à l'utilisateur de décider de l'effort de freinage qu'il souhaite appliquer au frein de stationnement, au lieu de remettre ce choix à une électronique de traitement incluant un calculateur qui décide de l'intensité de freinage à appliquer.

Pour ce faire, le moyen de commande selon l'invention inclut un organe mobile qui peut être déplacé par l'utilisateur entre plusieurs positions. Ce moyen de commande agit sur l'actionneur électrique du frein de stationnement pour que ce dernier applique aux freins un effort ayant une intensité qui dépend de la position de l'organe mobile.

Dans les cinq premiers modes de réalisation de l'invention, ce moyen de commande inclut un bouton rotatif que l'utilisateur peut manipuler pour le faire tourner et qu'il peut immobiliser dans une position angulaire de son choix.

Dans quatre autres modes de réalisation qui sont détaillés plus bas, ce moyen de commande inclut un levier mobile en translation, et que l'utilisateur peut immobiliser dans différentes positions linéaires.

### 1^{er} mode de réalisation de l'organe mobile

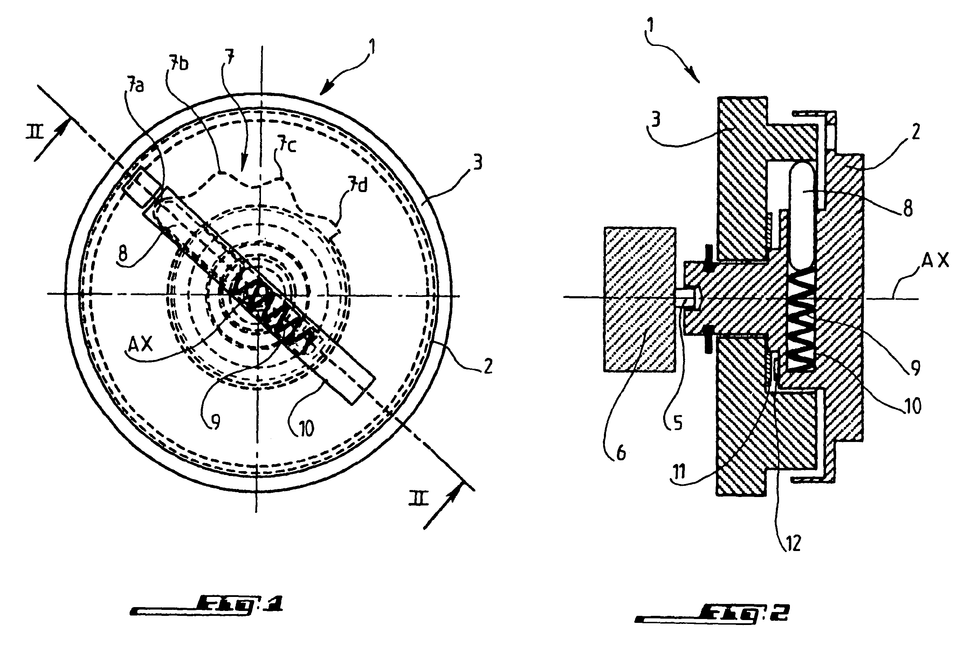

Les figures 1 et 2 montrent un moyen de commande 1 selon l'invention, dans lequel l'organe mobile est un bouton rotatif 2 libre de pivoter autour d'un axe AX, ce bouton rotatif étant monté sur un socle 3 fixe.

Ce bouton rotatif est lié en mouvement à un ou plusieurs capteurs de déplacement destinés à identifier sa position angulaire. Dans l'exemple des figures 1 et 2, le bouton rotatif est lié en mouvement à l'axe 5 d'un potentiomètre 6 dont le corps est rigidement solidaire d'une partie fixe du véhicule.

Ce potentiomètre 6 est relié par des fils électriques non représentés à un actionneur non représenté, éventuellement à travers une carte électronique. Ainsi, l'actionneur électrique peut être piloté par le potentiomètre 6 pour appliquer aux freins un effort de freinage qui est par exemple proportionnel à une tension de sortie du potentiomètre 6, c'est-à-dire à la position angulaire du bouton rotatif.

Selon l'invention, l'organe mobile qui est ici le bouton rotatif 2 peut être immobilisé dans différentes positions angulaires, de telle sorte que l'utilisateur définit l'effort de freinage qu'il souhaite obtenir en faisant pivoter ce bouton rotatif d'une valeur plus ou moins grande.

Dans l'exemple des figures 1 et 2, le moyen de commande 1 est équipé de moyens d'indexage mécaniques qui définissent quatre positions angulaires stables prédéterminées.

Ces moyens d'indexage sont ici formés par un chemin de came 7 réalisé dans le socle 3, qui entoure une partie inférieure du bouton rotatif 2, et qui collabore avec un pion coulissant 8 solidaire du bouton 2 et maintenu en appui contre ce chemin de came 7 par un ressort 9.

Plus particulièrement, le chemin de came 7 a ici une forme d'arc de spirale comprenant des creux ou renfoncements successifs s'étendant radialement, repérés par 7a, 7b, 7c et 7d. Chaque creux ou renfoncement correspond à une position d'indexation, c'est-à-dire à une position stable dans laquelle le bouton rotatif peut être immobilisé du fait de la pression exercée par le pion coulissant 8.

Dans la figure 1, le bouton rotatif 2 est dans une position angulaire pour laquelle le frein n'est pas activé, à savoir la position pour laquelle le pion coulissant est engagé dans le premier renfoncement 7a. Ce premier renfoncement 7a correspond au début de l'arc de spirale, à savoir, la portion de cet arc qui est la plus éloignée de l'axe AX.

Grâce à la forme d'arc de spirale du chemin de came 7, l'utilisateur doit exercer sur le bouton rotatif un couple d'autant plus élevé qu'il souhaite faire pivoter ce bouton sur un angle important. En d'autres termes l'effort que doit exercer l'utilisateur est d'autant plus élevé que cet utilisateur souhaite obtenir un freinage important.

Cette caractéristique permet notamment d'éviter que l'utilisateur ne soit tenté d'effectuer systématiquement un serrage maximal du frein lorsqu'il actionne ce frein, ce qui aurait pour inconvénient majeur de provoquer une usure prématurée des câbles de freins et autres organes de freinage.

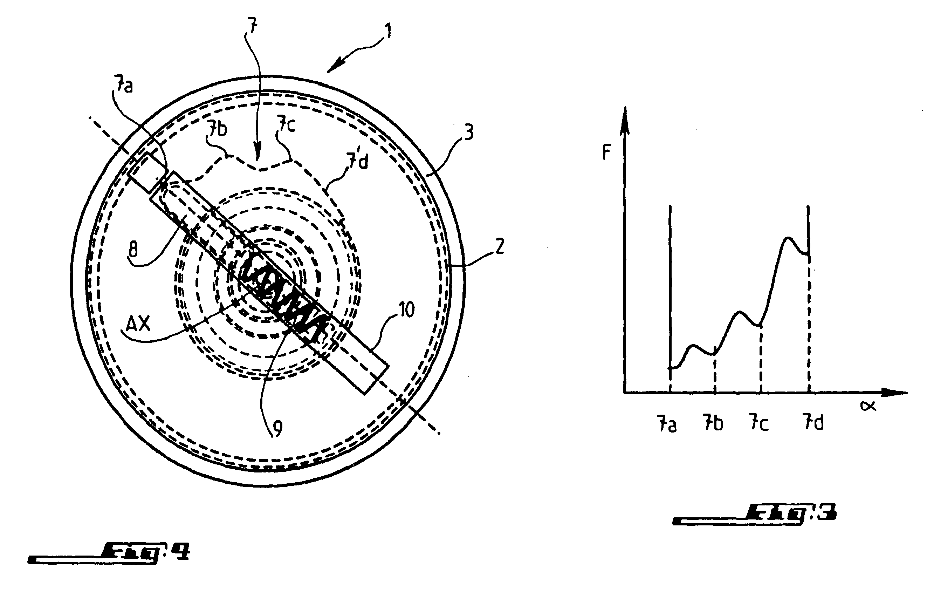

La figure 3 est un diagramme dans lequel l'axe des abscisses donne l'angle du bouton rotatif, et l'axe des ordonnées donne l'effort à appliquer pour atteindre une position angulaire. Elle montre la relation entre l'effort qu'applique l'utilisateur et la position angulaire du bouton rotatif.

Comme visible sur cette figure, l'effort à appliquer pour atteindre une position de serrage élevée telle que 7c ou 7d est supérieur à l'effort à générer pour atteindre une position de serrage plus faible telle que 7b.

Plus généralement, l'effort à appliquer pour passer de la position 7c à 7d est supérieur à l'effort à appliquer pour passer de la position 7b à 7c qui est lui-même supérieur à l'effort à appliquer pour passer de la position 7a à 7b.

Cette spécificité pourra d'ailleurs être encore accentuée en jouant sur les angles qui séparent les positions successives du bouton rotatif. Ainsi, il peut être prévu que l'angle séparant les positions 7a et 7b soit inférieur à celui séparant les positions 7b et 7c, qui est lui-même inférieur à l'angle séparant les positions 7c et 7d.

Dans l'exemple des figures 1 à 3, le moyen de commande comprend quatre positions indexées, mais il pourrait aussi bien comprendre un nombre plus important ou plus faible de positions indexées.

Dans la figure 2, on a aussi représenté un autre capteur de déplacement qui est repéré par 11 et 12. Cet autre capteur de déplacements est ici constitué par une couronne 11 solidaire du socle 3, qui collabore avec un curseur 12 solidaire du bouton rotatif. La couronne 11 porte plusieurs pistes électriques qui définissent plusieurs secteurs angulaires, et le curseur 12 est en appui sur cette couronne, de manière à être en contact électrique avec celle-ci.

Cet autre capteur de déplacement permet d'identifier le secteur angulaire dans lequel se trouve le bouton rotatif, pour piloter l'actionneur non représenté du frein électrique.

Plus particulièrement, cet autre capteur de mouvement est redondant avec le potentiomètre 6, de manière à augmenter la fiabilité de fonctionnement du moyen de commande. Avantageusement, une carte électronique non représentée pilote l'actionneur électrique en étant électriquement reliée au potentiomètre 5, 6 et au capteur 11, 12, et cette carte synthétise les informations issues de ces deux capteurs pour piloter l'actionneur.

Dans le cas où les informations issues des deux capteurs de positions sont contradictoires, la carte peut ainsi signaler à l'utilisateur l'existence d'un défaut dans le moyen de commande du frein.

Ce moyen de commande, du fait de ses faibles dimensions peut être placé au choix à différents endroits dans le véhicule, comme par exemple sur la console centrale, ou bien sur le tableau de bord, ce qui permet de libérer l'espace situé entre les deux sièges, qui est habituellement occupé par les commandes de frein classiques.

### 2^{ème} mode de réalisation de l'organe mobile

Dans l'exemple des figures 1 et 2, le chemin de came 7 comprend en début de parcours un premier renfoncement 7a, qui correspond à une position angulaire pour laquelle le frein est desserré, et un dernier renfoncement 7d qui se situe dans la dernière portion du chemin de came 7, et qui correspond à une position angulaire du bouton rotatif pour laquelle le frein est à son niveau de serrage maximal.

Dans le second mode de réalisation de l'organe mobile l'invention qui est représenté sur la figure 4, le profil du chemin de came comprend, dans la dernière portion qui correspond à des niveaux de serrage élevés, une zone sensiblement rectiligne, repérée par 7'd.

Cette dernière zone 7'd est prévue pour permettre un serrage maximal du frein par l'utilisateur tout en assurant que l'utilisateur ne soit pas tenté de demander un serrage maximal du frein de façon systématique.

Plus particulièrement, cette zone rectiligne 7'd correspond à une position instable du bouton rotatif 2. Lorsque l'utilisateur souhaite obtenir un serrage maximal du frein, il doit faire tourner le bouton pour qu'il atteigne une position angulaire dans laquelle le pion est en appui dans cette zone rectiligne 7'd, et maintenir le bouton rotatif dans cette position pour que l'actionneur augmente le niveau de serrage qu'il applique.

Plus l'utilisateur maintient le bouton dans cette position angulaire pendant une durée importante, plus l'actionneur augmente le niveau de serrage. Lorsque l'utilisateur relâche le bouton rotatif, celui-ci revient spontanément se positionner dans la position 7c, du fait de la pente de la section rectiligne 7'd.

Ce second mode de réalisation assure ainsi que l'utilisateur ne demande un serrage maximal que lorsque cela est réellement nécessaire, ce qui permet d'augmenter la durée de vie des câbles et autres organes constitutifs du frein de stationnement.

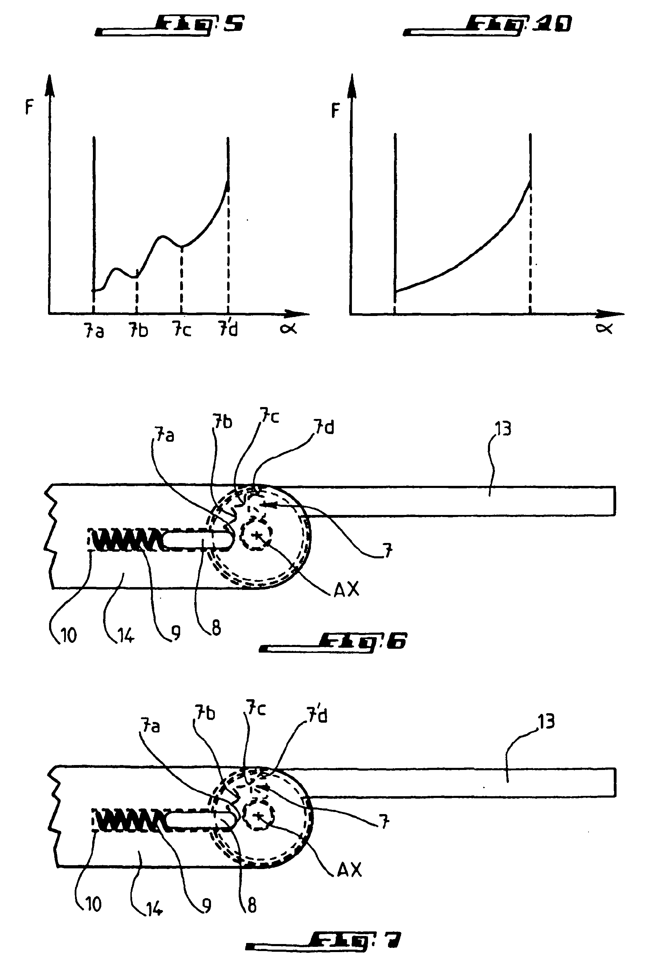

Le diagramme de la figure 5 donne la relation entre la position angulaire du bouton rotatif et l'effort à appliquer à celui-ci, dans le cas de ce second mode de réalisation. Ce diagramme dans lequel la position angulaire est représentée sur l'axe des abscisses, et l'effort à fournir sur l'axe des ordonnées fait apparaître que l'effort que doit appliquer l'utilisateur pour obtenir un serrage maximal est supérieur à celui qu'il doit appliquer pour atteindre les autres positions angulaires indexées, et que la zone rectiligne 7'd ne correspond pas à une position stable du bouton rotatif.

Avantageusement, l'organe de commande peut être dimensionné de telle manière que l'effort à appliquer pour passer de la position 7c à la position 7'd soit nettement supérieur à celui qui doit être fourni pour passer de la position 7b à 7c.

### 3^{ème} mode de réalisation de l'organe mobile

Dans les modes de réalisation précédents, le moyen de commande se présente sous la forme d'un bouton rotatif qui est par exemple placé sur la console du véhicule, et que l'utilisateur actionne directement pour commander le freinage.

Mais ce bouton rotatif peut aussi se présenter sous la forme d'une palette ou poignée dont l'embase est montée rotative, comme dans le troisième mode de réalisation de l'invention qui est représenté sur la figure 6.

Dans cet exemple, le bouton rotatif est une palette 13 ayant une forme similaire à celle d'une poignée d'actionnement de frein à main classique, et pouvant être positionnée par exemple entre les deux sièges avant du véhicule, dans le prolongement d'un accoudoir 14 qui constitue ici le socle du moyen de commande.

Comme visible dans la figure 6, c'est ici dans le bouton rotatif, à savoir l'embase rotative de la palette 13, qu'est réalisé un chemin de came 7. Le pion coulissant 8 est quant à lui apte à se déplacer dans un logement 10 qui est ici réalisé dans le socle 14.

Le chemin de came définit ici quatre position stables repérées par 7a à 7d, comme dans le premier mode de réalisation, de telle sorte que le diagramme donnant l'effort en fonction de la position angulaire pour ce troisième mode de réalisation est le diagramme de la figure 3 qui a été présenté plus haut.

### 4^{ème} mode de réalisation de l'organe mobile

Dans un quatrième mode de réalisation de l'invention, le moyen de commande comprend une palette rotative, comme dans le troisième mode de réalisation, mais le chemin de came 7 comprend une portion terminale rectiligne 7'd, comme dans le second mode de réalisation.

Ainsi, de manière analogue, la courbe de la position de la palette en fonction de l'effort à lui appliquer est donnée par la figure 5.

Dans ce mode de réalisation l'utilisateur tire sur la palette 13 pour commander le serrage du frein, et la palette s'immobilise dans l'une des positions angulaires indexées telles que 7a, 7b, ou 7c.

Si l'utilisateur souhaite obtenir un niveau de freinage supérieur, il peut encore tirer la palette vers le haut pour atteindre une position angulaire dans laquelle le pion 8 est en appui dans la zone rectiligne 7'd du chemin de came 7, ce qui correspond à une situation dans laquelle l'actionneur est piloté pour augmenter l'effort de freinage tant que la palette est maintenue dans cette zone.

Lorsque l'utilisateur relâche la palette, celle-ci revient spontanément dans la position 7c du fait de la forme spécifique du chemin de came 7.

### 5^{ème} mode de réalisation de l'organe mobile

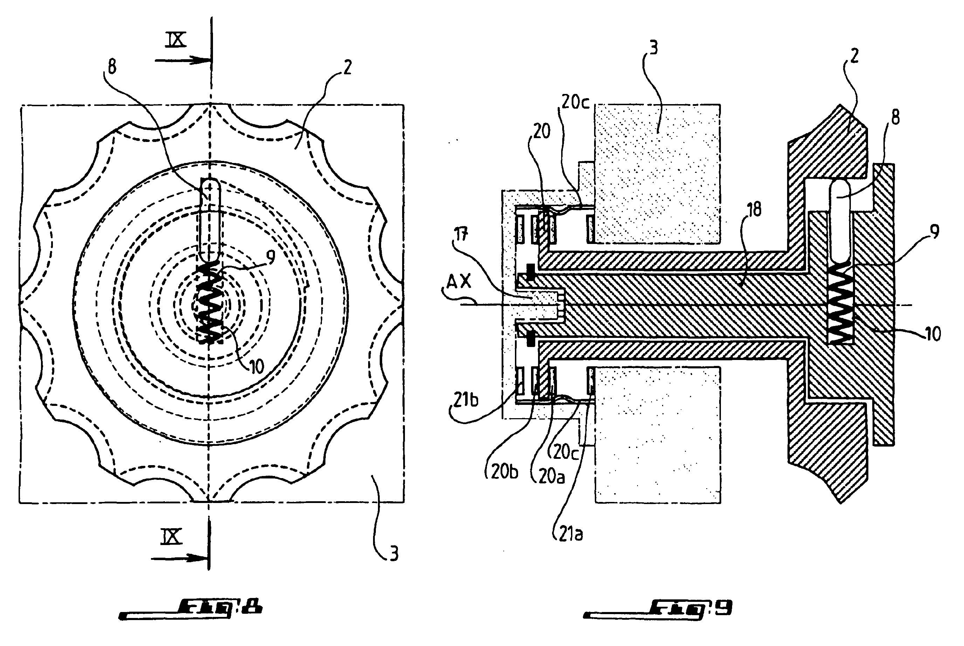

Dans le cinquième mode de réalisation de l'invention qui est représenté sur les figures 8 et 9, le moyen de commande comprend un socle 3 et un bouton rotatif 2, mais le bouton rotatif est prévu pour pouvoir être immobilisé par l'utilisateur dans toute position angulaire située entre la position de serrage minimal et la position de serrage maximal.

En d'autres termes, selon ce cinquième mode de réalisation, l'utilisateur peut immobiliser le bouton rotatif dans toute position angulaire au lieu d'être limité aux positions indexées telles que les positions 7a à 7d qui étaient prévues dans les modes de réalisation précédents.

Cette possibilité est obtenue au moyen d'un bouton rotatif 2 qui peut aussi être déplacé selon la direction axiale pour être positionné soit dans une position poussée soit dans une position tirée.

Lorsque l'utilisateur souhaite manipuler ce bouton rotatif, il doit le pousser comme dans l'exemple de la figure 9 pour pouvoir le faire pivoter jusqu'à une position angulaire voulue, puis il doit le tirer vers lui pour que le bouton rotatif s'immobilise de façon stable dans la position angulaire souhaitée.

Comme représenté sur les figures 8 et 9, le moyen de commande selon ce cinquième mode de réalisation comprend un socle 3 incluant une portion cannelée 17 sur laquelle est engagé un noyau central 18 ayant une section interne cannelée.

La portion cannelée 17 et le noyau 18 s'étendent selon la direction axiale AX, le noyau 18 pouvant se déplacer axialement le long de cet axe AX pour être soit poussé soit tiré.

Le noyau 18 est entouré par le bouton rotatif 2 qui peut pivoter par rapport à ce noyau 18 et se translater le long de l'axe AX, avec le noyau 18.

Comme visible sur la figure 9, l'une des extrémité du noyau 18 est engagée dans la portion cannelée 17, et l'extrémité opposée de ce noyau comprend une tête portant le pion 8. Ce pion 8 est mobile radialement, et est maintenu en appui contre un chemin de came 7 qui est réalisé dans une zone du bouton rotatif 2 entourant la tête du noyau 18.

Comme visible sur la figure 8, le chemin de came 7 a ici une forme d'arc de spirale qui est dépourvue de creux ou de renfoncements car ce n'est pas ce chemin de came qui permet l'immobilisation du bouton en rotation comme c'était le cas dans les mode de réalisation présentés plus haut.

Dans ce mode de réalisation, le chemin de came 7 est une partie d'un dispositif de rappel tendant à ramener le bouton rotatif dans sa position initiale. Il assure notamment que l'effort que doit appliquer l'utilisateur pour faire pivoter le bouton 2 est d'autant plus important qu'il souhaite atteindre une position angulaire correspondant à un serrage de forte intensité.

La relation entre la position angulaire et l'effort à appliquer est représentée schématiquement sur la figure 10 dans laquelle la position angulaire est représentée sur l'axe des abscisses, et l'effort à fournir sur l'axe des ordonnées.

Comme visible dans cette figure 10, l'effort à fournir pour faire pivoter le bouton est une fonction continûment croissante de la position angulaire de celui-ci.

La possibilité d'immobiliser le bouton rotatif 2 dans toute position angulaire comprise entre la position de desserrage et la position de serrage maximal est obtenue grâce à des aimants ayant des formes toriques. Il peut aussi être envisagé de mettre en oeuvre, en complément, des secteurs de forme toriques, crantés, afin d'empêcher la rotation.

Ces aimants qui sont représentés en coupe sur la figure 9 sont situés sensiblement au niveau de la base du bouton rotatif, c'est-à-dire à proximité de la portion cannelée 17.

Plus particulièrement, le bouton rotatif 2 comprend à son extrémité qui est la plus proche de la portion cannelée 17 du socle 3, un épaulement définissant une paroi plane circulaire 20. Cette paroi plane circulaire 20 porte deux aimants 20a et 20b respectivement sur sa face dirigée vers la tête du noyau 18 et sur la face opposée.

Autour de la portion cannelée 17, le socle 3 définit une cavité comprenant deux surfaces situées en vis-à-vis respectivement de l'aimant 20a et de l'aimant 20b. Ces deux surfaces portent respectivement deux autres aimants de formes toriques 21a et 21b.

Les polarités de ces quatre aimants sont agencées pour que l'aimant 20a et l'aimant 21a s'attirent mutuellement, et pour que l'aimant 20b et 21b s'attirent mutuellement.

Ainsi, lorsque l'utilisateur pousse le bouton rotatif 2, par exemple en appuyant sur la tête du noyau 18, les aimants 20a et 21a s'éloignent l'un de l'autre ce qui fait réduire leur attraction mutuelle, alors que les aimants 20b et 21b sont rapprochés l'un de l'autre ce qui accroît l'intensité de leur attraction mutuelle, de sorte que le bouton rotatif 2 est maintenu de façon stable dans un état enfoncé.

Lorsque l'utilisateur tire le bouton rotatif 2 vers lui, ce sont les aimants 20b et 21b qui s'éloignent l'un de l'autre, et les aimants 20a et 21a sont rapprochés l'un de l'autre jusqu'à être en appui l'un contre l'autre pour maintenir le bouton rotatif de façon stable dans une position angulaire et de façon stable en position tirée, à l'encontre du dispositif de rappel comprenant le chemin de came 7, le pion 8, et le ressort 25.

Avantageusement, les aimants 20a et 21a ont des surfaces de contact mutuelles qui définissent un coefficient de frottement relativement élevé pour assurer le maintien en position angulaire du bouton rotatif 2 lorsque ces surfaces sont en contact l'une avec l'autre.

Il est aussi possible de choisir les surfaces de contact pour que la valeur de ce coefficient de frottement soit à la fois suffisamment élevée pour bloquer le bouton rotatif dans sa position angulaire, et suffisamment faible pour permettre à l'utilisateur de faire pivoter le bouton rotatif sans qu'il lui soit nécessaire de le repousser.

Comme visible sur les figures, grâce à ce moyen de commande, pour relâcher le frein de stationnement, l'utilisateur peut simplement enfoncer le bouton rotatif en exerçant un effort sur la tête du noyau 18 ce qui a pour effet de décoller les aimants 20a et 21a l'un de l'autre, et provoque spontanément le retour du bouton rotatif dans sa position de desserrage sous l'effet de l'action du pion coulissant 8 qui est maintenu en appui contre le chemin de came 7 par le ressort 9.

A l'inverse, partant d'un état desserré du frein, dans lequel le bouton rotatif 2 est enfoncé, l'utilisateur doit simplement faire pivoter le bouton rotatif 2 pour obtenir le niveau de serrage souhaité, puis tirer le bouton vers lui pour qu'il s'immobilise de façon stable dans la position angulaire choisie.

En variante, les aimants 20a, 20b, 21a et 21b peuvent être remplacés par un ou plusieurs ressorts à lames tels que ceux repérés par 20c sur la figure 9 et tendant à placer spontanément le bouton rotatif dans une position privilégiée ou une autre, à savoir la position enfoncée, et la position tirée.

Plus particulièrement, chaque ressort à lame 20c est solidaire d'une partie rapportée au support 3 et solidaire de celui-ci, et chacun de ces ressorts est situé en regard du bord de la paroi circulaire 20.

Chaque ressort s'étend parallèlement à l'axe du noyau 18, et a chacune de ses extrémités fixée à la partie rapportée. De plus, chaque comprend une zone courbe, située à mi-longueur, interceptant le bord de la paroi 20, de manière à repousser celle-ci soit vers la position enfoncée, soit vers la position tirée.

En complément des ressorts 20c, la commande comprend une ou plusieurs dents solidaires de la paroi 20, chaque dent coopérant avec une crémaillère circulaire complémentaire située à l'emplacement de l'aimant 21a, pour maintenir le bouton rotatif dans toute position angulaire lorsque ce bouton rotatif est tiré.

### 6^{ème} mode de réalisation de l'organe mobile

Dans les différents modes de réalisation présentés plus haut, l'organe mobile du moyen de commande est un bouton rotatif, mais l'invention prévoit également que cet organe mobile soit un levier déplaçable en translation par rapport au socle 3 pour définir avec précision le niveau de freinage souhaité, comme c'est le cas dans les modes de réalisation qui suivent.

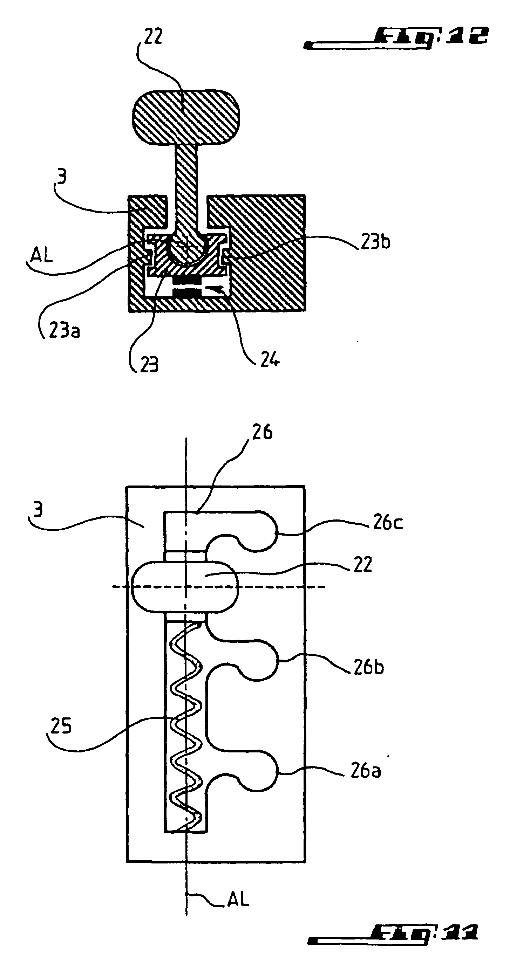

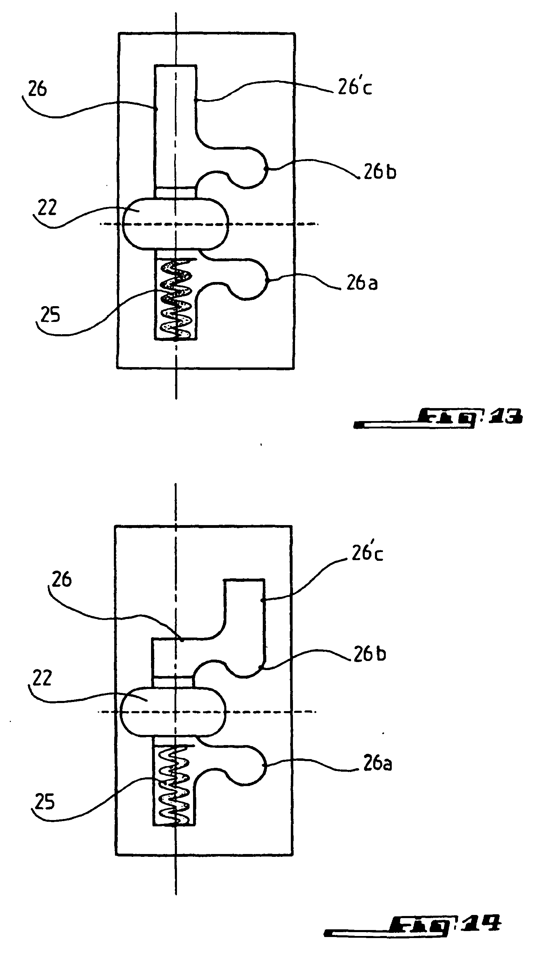

Selon un sixième mode de réalisation de l'invention qui est représenté sur les figures 12 et 13, le moyen de commande selon l'invention comprend un socle de forme sensiblement parallélépipédique, dans lequel coulisse un levier 22 qui peut ainsi être déplacé le long d'un axe longitudinal AL qui correspond à la direction du plus grand côté de ce socle parallélépipédique.

Plus particulièrement, le levier 22 coulisse dans une rainure 26 réalisée dans la paroi supérieure horizontale du socle 3, et ce levier 22 a sa base solidaire d'un curseur 23 qui coulisse longitudinalement dans des rails de guidage 23a et 23b réalisés à l'intérieur du socle 3.

Comme visible sur la vue en coupe de la figure 12, le levier 22 est solidaire en mouvement du curseur 23 tout en pouvant tourner par rapport à celui-ci autour de l'axe longitudinal AL, de sorte que l'utilisateur peut incliner ce levier vers la droite sur la figure 12 ou bien le positionner verticalement.

Comme dans les autres modes de réalisation présentés plus haut, le moyen de commande est ici équipé d'un détecteur de déplacement 24 qui permet d'identifier la position longitudinale du levier 22 dans le socle 3 pour piloter l'actionneur électrique de telle sorte qu'il applique aux câbles de frein un effort de freinage qui soit proportionnel à la position longitudinale du levier.

La figure 11 fait apparaître un ressort de rappel 25 ayant une extrémité solidaire du socle 3 et une extrémité solidaire du curseur 23. Grâce à ce ressort de rappel 25 du levier, l'utilisateur doit exercer sur le levier un effort d'autant plus important qu'il souhaite le placer dans une position correspondant à un niveau de serrage important.

Comme visible dans la figure 11, la rainure 26 qui est réalisée dans la paroi supérieure horizontale du socle comprend une portion principale longitudinale parallèle à l'axe AL, et dans laquelle coulisse le levier.

Cette rainure comprend encore des échancrures latérales repérées par 26a, 26b et 26c, qui constituent un crantage permettant d'immobiliser le levier 22 dans différentes positions d'indexations prédéterminées, de manière à maintenir un effort de serrage sur les freins.

Chaque échancrure latérale s'étend selon une direction perpendiculaire à la direction AL vers la droite sur les figures. Lorsque le levier est avancé par l'utilisateur et qu'il est au niveau d'une échancrure latérale, l'utilisateur peut engager ce levier dans cet évidement en faisant pivoter ce levier vers la droite autour de l'axe AL.

Ainsi, le levier est maintenu en position dans l'échancrure en étant maintenu en appui contre celle-ci par le ressort de rappel 25.

Comme visible sur la figure 11, les échancrures latérales comprennent chacune un bossage dans la zone qui les relie à la rainure principale, de sorte que le diagramme donnant la correspondance entre la position longitudinale du levier et l'effort à appliquer a la même allure que celui de la figure 3.

### 7^{ème} mode de réalisation de l'organe mobile

La rainure 26 peut également être prévue pour comprendre une zone terminale rectiligne, c'est-à-dire sans échancrure latérale, qui correspond à une portion dans laquelle l'utilisateur doit emmener le levier 22 lorsqu'il souhaite obtenir un serrage maximal, mais dans laquelle il n'est pas possible d'immobiliser ce levier.

Ainsi, dans le septième mode de réalisation qui correspond à la figure 14, la rainure 26 est formée par une longue portion droite comprenant deux échancrures 26a et 26b, et cette portion droite se termine par une zone 26'c qui est dépourvue d'échancrure latérale.

Le diagramme donnant la position en fonction de l'effort à appliquer pour ce mode de réalisation a la même allure que celui de la figure 5.

### 8^{ème} mode de réalisation de l'organe mobile

Dans le huitième mode de réalisation qui est représenté sur la figure 14, la rainure 26 c'est la dernière échancrure latérale qui est prolongée par une portion rectiligne 26'c qui s'étend parallèlement à la longue portion droite de la rainure en étant décalée vers la droite.

Ainsi, lorsque l'utilisateur souhaite obtenir un effort de serrage maximal, il doit d'abord déplacer le levier jusqu'au niveau de la dernière échancrure 26b pour pouvoir l'engager dans celle-ci en faisant pivoter le levier vers la droite. Il peut alors continuer de déplacer le levier 22 le long de la portion rectiligne 26'c pour demander une intensité de serrage maximale.

### 9^{ème} mode de réalisation l'organe mobile

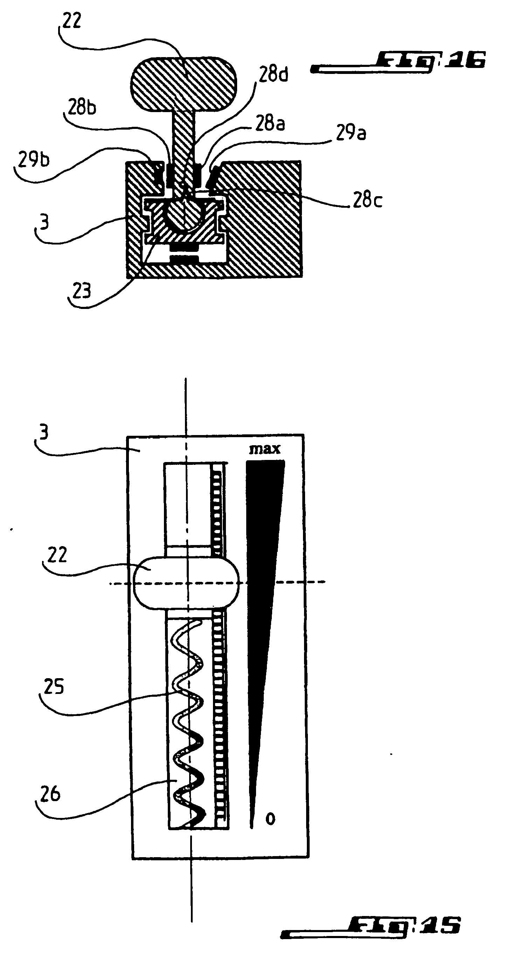

Selon le neuvième mode de réalisation qui est représenté sur les figures 15 et 16, le moyen de commande selon l'invention est agencé pour permettre à l'utilisateur d'immobiliser le levier 22 dans toute position le long de la rainure 26.

Selon ce mode de réalisation, le dispositif comprend également un socle parallélépipédique 3 dans lequel coulisse longitudinalement un levier 22 selon l'axe AL, ce levier étant ici aussi apte à pivoter vers la droite sur les figures et étant retenu par un ressort de rappel 25. La rainure 26 a ici une forme rectangulaire, en étant dépourvue d'échancrure latérale.

Dans ce neuvième mode de réalisation, le moyen de commande comprend quatre aimants repérés par 28a, 28b, 29a et 29b. Les deux aimants 28a et 28b sont par exemple des pastilles aimantées fixés au levier 22, de part et d'autre de la base de ce levier. Les deux aimants 29a et 29b ont chacun une forme linéaire et s'étendent parallèlement à la rainure 26 en étant placés sous la paroi horizontale supérieure, en étant en vis-à-vis, respectivement des aimants 28a et 28b du levier.

Ces aimants sont encore polarisés de telle manière que les aimants 28a et 29a s'attirent mutuellement, et de telle sorte que les aimants 28b et 29b s'attirent également mutuellement.

Lorsque le levier occupe une position verticale, comme sur les figures, il peut être déplacé le long de la rainure. Mais lorsqu'il est rabattu vers la droite sur les figures, l'aimant 28a vient en contact avec l'aimant 29a qui l'attire, ce qui a pour effet d'immobiliser le levier dans la position correspondante.

Avantageusement, les aimants 28a et 29a ont des surfaces de contacts choisies et traitées pour définir un coefficient de frottement relativement élevé afin d'assurer l'immobilisation du levier lorsqu'ils sont en appui l'un contre l'autre.

De même que dans le cas du bouton rotatif présenté plus haut, le coefficient de frottement défini par les surfaces de contact de ces aimants est choisi pour avoir une valeur à la fois suffisamment élevée pour maintenir le levier immobile à l'encontre du ressort 25, mais aussi suffisamment faible pour permettre à l'utilisateur de déplacer longitudinalement le levier 22 sans avoir à l'incliner vers la gauche sur les figures, de manière à lui permettre d'ajuster le niveau de serrage souhaité avec précision.

Il est aussi possible de mettre en oeuvre, en complément, des secteurs linéaires crantés afin de faciliter l'immobilisation du levier.

Ainsi, partant d'une position desserrée de l'organe de commande, l'utilisateur doit avancer le levier pour commander le serrage à un niveau qui correspond à la position du longitudinale du levier, et il doit rabattre ce levier vers la droite pour l'immobiliser en position afin que l'actionneur maintienne le niveau de serrage demandé.

On notera que pour desserrer le frein, il suffit à l'utilisateur de tirer le levier vers la gauche sur les figures pour décoller les aimants 28a et 29a de sorte que le levier revient alors spontanément vers la position de desserrage sous l'effet du ressort de rappel 25.

La courbe donnant la relation entre la position du levier et l'effort nécessaire pour atteindre cette position a ici la même allure que celle du diagramme de la figure 10.

En variante, les aimants 28a, 28b, 29a, 29c peuvent être remplacés par un ressort à lame repéré par 28c sur la figure 16, ce ressort à lame étant solidaire du curseur 23 et coopérant avec le levier 22 pour le positionner soit en appui vers la droite sur la figure, soit vertical.

Ce ressort 28c a la forme d'une lame repliée en son centre, et coopère avec un ergot 28d rigidement solidaire du pied du levier 22.

Le pli central du ressort à lame 28c intercepte l'ergot 28d lorsque le levier est basculé vers la droite ou vers la gauche, ce qui a pour effet de maintenir spontanément le levier dans deux positions privilégiées, c'est-à-dire soit vers la gauche soit vers la droite, selon la position dans laquelle il est laissé par l'utilisateur.

En complément du ressort 28c, la commande comprend une ou plusieurs dents ou doigts solidaires du pied du levier, chaque dent coopérant avec une crémaillère complémentaire située à l'emplacement de l'aimant 29a, pour maintenir le levier dans toute position longitudinale donnée lorsqu'il est rabattu vers la droite sur les figures.

Le dispositif de commande comprend encore, avantageusement, des circuits électriques ou électroniques complémentaires pour que le desserrage du frein ne soit possible que lorsque le contact du véhicule est enclenché.

Cependant, après avoir déplacé le bouton rotatif 10 ou le levier longitudinal 22 vers la position de desserrage lorsque le contact est éteint, et donc sans provoquer le desserrage du frein, l'enclenchement ultérieur du contact pourrait provoquer un desserrage brutal et imprévu du frein. L'invention apporte également un dispositif additionnel de sécurité afin d'éviter cette situation dangereuse.

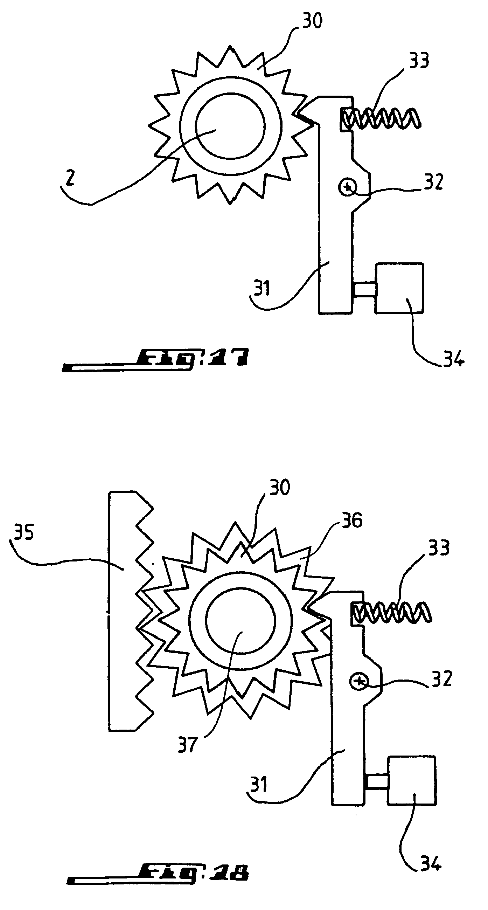

Ce dispositif additionnel est représenté schématiquement pour une commande à bouton rotatif dans la figure 17, et pour une commande à levier linéaire dans la figure 18.

Dans le cas d'une commande à bouton rotatif, il comprend une roue libre 30 ayant un moyeu solidaire en rotation du bouton rotatif 2, de telle sorte que lorsque cette roue libre est immobilisée, elle autorise la rotation du bouton 2 seulement dans un sens qui correspond au sens de serrage du frein.

Un pion basculant 31, monté rotatif autour d'un axe 32 situé en son centre, et coopérant avec un ressort 33 et avec un électroaimant 34 est prévu pour immobiliser cette roue libre 30 ou pour la laisser libre de tourner selon que l'électroaimant est désactivé ou activé.

Une première extrémité du pion basculant 31 comprend une dent 31' entrant dans une denture externe de la roue libre 30 pour l'immobiliser en rotation, le ressort 33 exerçant une pression tendant à engager cette dent dans la denture.

Lorsque l'électroaimant 34 est activé, c'est-à-dire notamment lorsque le contact du véhicule est enclenché, l'électroaimant 34 agit sur la seconde extrémité du pion basculant 31 pour le faire pivoter autour de l'axe 32, dans le sens indirect sur les figures, à l'encontre du ressort 33.

Dans ce cas, la première extrémité du pion basculant 31 libère la roue libre pour qu'elle puisse tourner et permette ainsi au bouton rotatif de tourner dans les deux sens.

L'utilisateur peut ainsi desserrer le frein seulement lorsque le contact du véhicule est enclenché, puisque le bouton rotatif est alors mobile dans les deux sens de rotation. Lorsque le contact n'est pas enclenché, la roue libre 30 est immobilisée, et l'utilisateur ne peut agir sur le bouton rotatif que pour le faire pivoter dans le sens de serrage.

La roue libre 30 est ici présentée à titre d'exemple de réalisation, mais elle pourrait aussi bien être remplacée par une roue simple ayant une denture périphérique inclinée, de manière à autoriser le glissement de la dent du pion basculant dans un sens, mais pas dans l'autre.

La figure 18 montre une adaptation du dispositif de la figure 17 à une commande à levier linéaire 22.

Comme visible sur cette figure, dans ce cas, une crémaillère 35 est solidaire du curseur du levier 22 cette crémaillère s'étendant selon la direction de déplacement de ce levier.

Une roue libre 30, avec un pion basculant 31, similaires à ceux de la figure 17 coopèrent avec cette crémaillère par l'intermédiaire d'une roue dentée 36, pour interdire de manoeuvrer le levier vers la position de desserrage lorsque le contact du véhicule n'est pas enclenché.

Plus particulièrement, la roue dentée 36 est engagée dans la crémaillère et elle est solidaire en rotation avec le moyeu 37 de la roue libre 30. Le levier basculant 31 avec le ressort 33 et l'électroaimant 34 coopèrent avec la roue libre 30 de la même façon que dans le cas de la figure 17.

## Revendications

1. Moyen de commande (1) de frein de stationnement électrique de véhicule automobile, comprenant un organe mobile (2, 22) par rapport à un socle (3, 14), ce moyen de commande (1) pilotant un actionneur électrique apte à appliquer un effort de freinage à un ou plusieurs récepteurs de freinage tels que des freins à disque ou à tambour, éventuellement via des câbles de frein, l'organe mobile (2, 22) pouvant être déplacé par un utilisateur pour être immobilisé dans différentes positions, le moyen de commande (1) pilotant l'actionneur électrique pour qu'il applique à chaque récepteur de freinage un effort de freinage ayant une valeur qui correspond à la position de l'organe mobile, **caractérisé en ce qu'**il comprend une roue libre (30) coopérant avec l'organe mobile (2, 22) et des moyens de blocage (31, 33, 34) aptes à bloquer la roue libre (30) lorsque le contact du véhicule est éteint pour interdire toute manipulation de l'organe mobile (2, 22) qui tendrait à diminuer l'effort de freinage appliqué aux récepteurs.

2. Moyen de commande selon la revendication 1, dans lequel l'organe mobile (2) est un bouton rotatif pouvant occuper différentes positions angulaires.

3. Moyen de commande selon l'une des revendications précédentes, dans lequel le bouton rotatif (2) est lié en mouvement à deux capteurs de déplacement (5, 6, 11, 12) redondants aptes chacun à identifier la position angulaire du bouton rotatif (2).

4. Moyen de commande selon l'une des revendications précédentes, dans lequel le bouton rotatif (2) est lié en mouvement d'une part à un potentiomètre (5, 6), et d'autre part à un sélecteur à pistes électriques (11, 12) qui constituent deux systèmes électriques redondants aptes chacun à identifier la position angulaire du bouton rotatif (2).

5. Moyen de commande selon l'une des revendications précédentes, comprenant un système d'indexation (7, 8, 9, 10) apte à immobiliser le bouton rotatif (2) dans différentes positions angulaires prédéterminées (7a, 7b, 7c, 7d).

6. Moyen de commande selon l'une des revendications précédentes, dans lequel le socle (3, 14) comprend un chemin de came (7) entourant une partie du bouton rotatif (2) ayant une forme générale d'arc de spirale, dans lequel le bouton rotatif (2) comprend un pion (8) apte à coulisser dans un logement (10), et dans lequel ce pion (8) a une extrémité maintenue en appui contre le chemin de came (7) par un ressort (9) situé en fond du logement (10).

7. Moyen de commande selon l'une des revendications précédentes, dans lequel le bouton rotatif (2) comprend un chemin de came (7) ayant une forme générale d'arc de spirale, dans lequel le socle (3, 14) comprend un pion (8) apte à coulisser dans un logement (10), et dans lequel ce pion (8) a une extrémité maintenue en appui contre le chemin de came (7) par un ressort (9) situé en fond du logement (10).

8. Moyen de commande selon l'une des revendications précédentes, dans lequel le chemin de came (7) ayant une forme générale d'arc de spirale comprend des creux ou renfoncements successifs (7a, 7b, 7c, 7d) qui correspondent chacun à une position d'indexation.

9. Moyen de commande selon l'une des revendications précédentes, dans lequel le bouton rotatif (2) peut être déplacé par l'utilisateur au-delà d'une dernière position d'indexation (7c) prédéterminée, sans pouvoir être immobilisé au-delà de cette dernière position d'indexation prédéterminée.

10. Moyen de commande selon l'une des revendications précédentes, dans lequel le bouton rotatif (2) est mobile en rotation à l'encontre d'un ressort de rappel (25), et dans lequel ce bouton rotatif (2) est aussi mobile en translation le long de l'axe (AX) autour duquel il peut tourner, entre une position tirée et une position poussée, dans lequel ce bouton rotatif (2) et le socle (3) comprennent chacun un aimant circulaire (20a, 21a), ces deux aimants circulaires étant polarisés pour s'attirer mutuellement, dans lequel ces deux aimants circulaires (20a, 21a) viennent en contact l'un avec l'autre lorsque le bouton rotatif (2) est tiré, et dans lequel ces deux aimants circulaires ont une surface de contact présentant un coefficient de frottement suffisamment élevé pour maintenir le bouton rotatif (2) en position à l'encontre du ressort de rappel (25) lorsque ce bouton rotatif (2) est tiré.

11. Moyen de commande selon l'une des revendications précédentes, comprenant une palette rotative (13) liée en mouvement au bouton rotatif (2).

12. Moyen de commande selon la revendication 1, dans lequel l'organe mobile est un levier (22) pouvant être déplacé linéairement entre plusieurs positions.

13. Moyen de commande selon la revendication 12, dans lequel le levier (22) est lié en mouvement à un ou plusieurs capteurs de déplacement (24) apte à identifier la position linéaire du levier (22).

14. Moyen de commande selon la revendication 13, comprenant un système d'indexation apte à immobiliser le levier dans différentes positions prédéterminées.

15. Moyen de commande selon l'une des revendications 13 ou 14, comprenant un socle (3) incluant une rainure longitudinale (26) dans laquelle peut coulisser le levier (22) à l'encontre d'un ressort de rappel (25), cette rainure longitudinale (26) comprenant plusieurs échancrures latérales (26a, 26b, 26c) correspondant chacune à une position indexée, et dans lequel le levier (22) est également mobile latéralement pour pouvoir être engagé dans une échancrure de manière à être bloqué dans une position indexée.

16. Moyen de commande selon l'une des revendications 13 à 15, dans lequel le levier (22) peut être déplacé par l'utilisateur au-delà (26'c) d'une dernière position d'indexation prédéterminée (26b), sans pouvoir être immobilisé au-delà de cette dernière position d'indexation prédéterminée.

17. Moyen de commande selon l'une des revendications 13 à 16, dans lequel le levier (22) est mobile latéralement par rapport à la rainure (26), entre une position sensiblement verticale et une position rabattue, dans lequel ce levier (22) et le socle (3) comprennent chacun un aimant (28a, 29a), ces deux aimants étant polarisés pour s'attirer mutuellement, ces deux aimants (28a, 29a) venant en contact l'un avec l'autre lorsque le levier (22) est rabattu, ces deux aimants (28a, 29a) ayant des surfaces de contact mutuelles présentant un coefficient de frottement suffisamment élevé pour maintenir le levier en position à l'encontre du ressort de rappel (25) lorsque ce levier (22) est rabattu.

18. Moyen de commande selon la revendication 1 à 17, **caractérisé en ce que** les moyens de blocage incluent un pion basculant (31), un ressort (33) tendant à maintenir ce pion (31) engagé dans une denture externe de la roue libre (30) pour la bloquer, et un électroaimant (34) apte à agir sur le pion basculant (31) à l'encontre du ressort (33) pour débloquer la roue libre (30) en désengageant l'extrémité du pion (31) de sa denture externe uniquement lorsque le contact du véhicule est enclenché.

19. Moyen de commande selon l'une des revendications précédentes, **caractérisé en ce que** la roue libre (30) comprend un moyeu solidaire de l'organe mobile (2), l'organe mobile (2) pouvant tourner dans le sens de diminution de l'effort de freinage appliqué aux récepteurs, uniquement lorsque la roue libre (30) est débloquée.

20. Moyen de commande selon l'une des revendications 1 à 18, **caractérisé en ce que** la roue libre (30) comprend un moyeu solidaire en rotation avec une roue dentée (36) engagée dans une crémaillère (35) solidaire en translation avec l'organe mobile (22) et s'étendant selon la direction de déplacement de cet organe (22), la crémaillère (35) pouvant se déplacer dans le sens de diminution de l'effort de freinage appliqué aux récepteurs, uniquement lorsque la roue libre (30) est débloquée.

## Claims

1. Control means (1) for an electric parking brake of a motor vehicle, comprising a member (2, 22) that can be moved relative to a base (3, 14), this control means (1) operating an electric actuator capable of applying a braking force to one or more braking receptors such as disc or drum brakes, if necessary via brake cables, the movable member (2, 22) being able to be moved by a user in order to be immobilized in various positions, the control means (1) operating the electric actuator so that it applies to each braking receptor a braking force having a value that corresponds to the position of the movable member, **characterized in that** it comprises a free wheel (30) interacting with the movable member (2, 22) and locking means (31, 33, 34) capable of locking the free wheel (30) when the ignition of the vehicle is switched off in order to prevent any operation of the movable member (2, 22) which would tend to diminish the braking force applied to the receptors.

2. Control means according to Claim 1, wherein the movable member (2) is a rotary knob that is able to occupy various angular positions.

3. Control means according to one of the preceding claims, wherein the rotary knob (2) is connected in movement to two redundant movement sensors (5, 6, 11, 12) each capable of identifying the angular position of the rotary button (2).

4. Control means according to one of the preceding claims, wherein the rotary knob (2) is connected in movement on the one hand to a potentiometer (5, 6), and on the other hand to an electric track selector (11, 12) which form two redundant electric systems each capable of identifying the angular position of the rotary knob (2).

5. Control means according to one of the preceding claims, comprising an indexation system (7, 8, 9, 10) capable of immobilizing the rotary knob (2) in various predetermined angular positions (7a, 7b, 7c, 7d).

6. Control means according to one of the preceding claims, wherein the base (3, 14) comprises a cam track (7) surrounding a portion of the rotary knob (2) having a general shape of an arc of a spiral, in which the rotary knob (2) comprises a pin (8) capable of sliding in a housing (10) and wherein this pin (8) has one end kept pressing against the cam track (7) by a spring (9) situated at the bottom of the housing (10).

7. Control means according to one of the preceding claims, wherein the rotary knob (2) comprises a cam track (7) having a general shape of an arc of a spiral, wherein the base (3, 14) comprises a pin (8) that is able to slide in a housing (10), and wherein this pin (8) has one end held pressing against the cam track (7) by a spring (9) situated in the bottom of the housing (10).

8. Control means according to one of the preceding claims, wherein the cam track (7) having a general shape of an arc of a spiral comprises successive hollows or recesses (7a, 7b, 7c, 7d) which each correspond to an indexation position.

9. Control means according to one of the preceding claims, wherein the rotary knob (2) may be moved by the user beyond a last predetermined indexation position (7c), without being able to be immobilized beyond this last predetermined indexation position.

10. Control means according to one of the preceding claims, wherein the rotary knob (2) is mobile in rotation against a return spring (25), and in that this rotary knob (2) is also mobile in translation along the axis (AX) about which it may turn, between a pulled position and a pushed position, wherein this rotary knob (2) and the base (3) each comprise a circular magnet (20a, 21a), these two circular magnets being polarized in order to mutually attract, wherein these two circular magnets (20a, 21a) come into contact with one another when the rotary knob (2) is pulled, and wherein these two circular magnets have a contact surface having a sufficiently high friction coefficient to hold the rotary knob (2) in position against the return spring (25) when this rotary knob (2) is pulled.

11. Control means according to one of the preceding claims, comprising a rotary paddle (13) connected in movement to the rotary knob (2).

12. Control means according to Claim 1, wherein the movable member is a lever (22) that is able to be moved linearly between several positions.

13. Control means according to Claim 12, wherein the lever (22) is connected in movement to one or more movement sensors (24) capable of identifying the linear position of the lever (22).

14. Control means according to Claim 13, comprising an indexation system capable of immobilizing the lever in various predetermined positions.

15. Control means according to one of Claims 13 or 14, comprising a base (3) including a longitudinal groove (26) wherein the lever (22) can slide against a return spring (25), this longitudinal groove (26) comprising several lateral notches (26a, 26b, 26c) each corresponding to an indexed position, and wherein the lever (22) can also be moved laterally to be able to be engaged in a notch so as to be locked in an indexed position.

16. Control means according to one of Claims 13 to 15, wherein the lever (22) may be moved by the user beyond (26'c) a last predetermined indexation position (26b), without being able to be immobilized beyond this last predetermined indexation position.

17. Control means according to one of Claims 13 to 16, wherein the lever (22) can be moved laterally relative to the groove (26), between a substantially vertical position and a folded position, wherein this lever (22) and the base (3) each comprise a magnet (28a, 29a), these two magnets being polarized in order to attract mutually, these two magnets (28a, 29a) coming into contact with one another when the lever (22) is folded, these two magnets (28a, 29a) having surfaces of mutual contact having a sufficiently high friction coefficient to hold the lever in position against the return spring (25) when this lever (22) is folded.

18. Control means according to Claims 1 to 17, **characterized in that** the locking means include a tilting pin (31), a spring (33) tending to hold this pin (31) engaged in an outer tooth of the free wheel (30) in order to lock it, and an electromagnet (34) capable of acting on the tilting pin (31) against the spring (33) in order to release the free wheel (30) by disengaging the end of the pin (31) from its outer tooth only when the ignition of the vehicle is engaged.

19. Control means according to one of the preceding claims, **characterized in that** the free wheel (30) comprises a hub fixedly attached to the movable member (2), the movable member (2) being able to rotate in the direction of reducing the braking force applied to the receptors, only when the free wheel (30) is released.

20. Control means according to one of Claims 1 to 18, **characterized in that** the free wheel (30) comprises a hub fixedly attached in rotation to a gear wheel (36) engaged in a rack (35) fixedly attached in translation to the movable member (22) and extending in the direction of movement of this member (22), the rack (35) being able to move in the direction of reducing the braking force applied to the receptors, only when the free wheel (30) is released.

## Patentansprüche

1. Bedienmittel (1) einer elektrischen Feststellbremse eines Kraftfahrzeugs, mit einem Glied (2, 22), das bezüglich einer Basis (3, 14) bewegt werden kann, wobei dieses Bedienmittel (1) eine elektrisches Stellglied steuert, das gegebenenfalls über Bremskabel eine Bremskraft an eine oder mehrere Bremsenbetätigungsvorrichtungen, wie zum Beispiel Scheiben- oder Trommelbremsen, anlegt, wobei das bewegliche Glied (2, 22) durch einen Benutzer verschoben werden kann, damit es in verschiedenen Positionen festgelegt werden kann, wobei das Bedienmittel (1) das elektrische Stellglied derart ansteuert, dass es an jede Bremsenbetätigungsvorrichtung eine Bremskraft mit einem Wert anlegt, der der Position des beweglichen Glieds entspricht, **dadurch gekennzeichnet, dass** es einen Freilauf (30), der mit dem beweglichen Glied (2, 22) zusammenwirkt, und Sperrmittel (31, 33, 34), die den Freilauf (30) sperren können, wenn die Zündung des Fahrzeugs ausgeschaltet ist, um jegliche Betätigung des beweglichen Glieds (2, 22), die die an die Betätigungsvorrichtungen angelegte Bremskraft tendenziell reduzieren würde, zu verhindern, aufweist.

2. Bedienmittel nach Anspruch 1, wobei das bewegliche Glied (2) ein Drehknopf ist, der verschiedene Winkelpositionen einnehmen kann.

3. Bedienmittel nach einem der vorhergehenden Ansprüche, wobei sich der Drehknopf (2) in Bewegungskopplung mit zwei redundanten Weggebern (5, 6, 11, 12) befindet, die jeweils die Winkelposition des Drehknopfs identifizieren können.

4. Bedienmittel nach einem der vorhergehenden Ansprüche, wobei der Drehknopf (2) in Bewegungskopplung einerseits mit einem Potentiometer (5, 6) und andererseits mit einer Vorrichtung zum Wählen elektrischer Bahnen (11, 12) verbunden ist, die zwei redundante elektrische Systeme bilden, welche jeweils die Winkelposition des Drehknopfes (2) identifizieren können.

5. Bedienmittel nach einem der vorhergehenden Ansprüche, mit einem Rastsystem (7, 8, 9, 10), das den Drehknopf (2) in verschiedenen vorbestimmten Winkelpositionen (7a, 7b, 7c, 7d) festlegen kann.

6. Bedienmittel nach einem der vorhergehenden Ansprüche, wobei die Basis (3, 14) eine Kurvenbahn (7) aufweist, die einen Teil des Drehknopfes (2) umgibt und eine allgemeine Spiralbogenform aufweist, wobei der Drehknopf (2) einen Stift (8) aufweist, der in einer Aufnahme (10) gleiten kann, und wobei dieser Stift (8) ein Ende aufweist, das durch eine sich am Boden der Aufnahme (10) befindende Feder (9) in Anlage an die Kurvenbahn (7) gehalten wird.

7. Bedienmittel nach einem der vorhergehenden Ansprüche, wobei der Drehknopf (2) eine Kurvenbahn (7) mit einer allgemeinen Spiralbogenform aufweist, wobei die Basis (3, 14) einen Stift (8) enthält, der in einer Aufnahme 810) gleiten kann, und wobei dieser Stift (8) ein Ende aufweist, das durch eine sich am Boden der Aufnahme (10) befindende Feder (9) in Anlage an die Kurvenbahn (7) gedrückt wird.

8. Bedienmittel nach einem der vorhergehenden Ansprüche, wobei die Kurvenbahn (7) mit der allgemeinen Spiralbogenform zwei aufeinander folgende Aushöhlungen oder Mulden (7a, 7b, 7c, 7d) aufweist, die jeweils einer Rastposition entsprechen.

9. Bedienmittel nach einem der vorhergehenden Ansprüche, wobei der Drehknopf (2) durch den Benutzer hinter eine letzte vorbestimmte Raststellung (7c) verschoben werden kann, ohne dass er hinter dieser letzten vorbestimmten Rastposition festgelegt werden kann.

10. Bedienmittel nach einem der vorhergehenden Ansprüche, wobei der Drehknopf (2) gegen eine Rückstellfeder (25) drehbar ist und wobei dieser Drehknopf (2) des Weiteren entlang der Achse (AX), um die er sich drehen kann, zwischen einer gezogenen Position und einer gedrückten Position, translatorisch verschoben werden kann, wobei diese Drehknopf (2) und die Basis (3) jeweils einen kreisförmigen Magneten (20a, 21a) aufweisen, wobei diese beiden kreisförmigen Magneten so gepolt sind, dass sie sich gegenseitig anziehen, wobei diese beiden kreisförmigen Magneten (20a, 21a) miteinander in Kontakt kommen, wenn der Drehknopf (2) gezogen wird, und wobei diese beiden kreisförmigen Magneten eine Kontaktfläche mit einem Reibungskoeffizienten aufweisen, der so hoch ist, dass er den Drehknopf (2) gegen die Rückstellfeder (25) in Position halten kann, wenn dieser Drehknopf (2) gezogen wird.

11. Bedienmittel nach einem der vorhergehenden Ansprüche, mit einem Drehflügel (13), der sich in Bewegungskopplung mit dem Drehknopf (2) befindet.

12. Bedienmittel nach einem der vorhergehenden Ansprüche, wobei das bewegliche Glied ein Hebel (22) ist, der zwischen mehreren Positionen linear verschoben werden kann.

13. Bedienmittel nach Anspruch 12, wobei sich der Hebel (22) in Bewegungskopplung mit einem oder mehreren Weggebern (24), die die lineare Position des Hebels (22) identifizieren können, befindet.

14. Bedienmittel nach Anspruch 13, mit einem Rastsystem, das den Hebel in verschiedenen vorbestimmten Positionen festlegen kann.

15. Bedienmittel nach Anspruch 13 oder 14, mit einer Basis (3), die eine Längsnut (26) enthält, in der der Hebel (22) gegen eine Rückstellfeder (25) gleiten kann, wobei diese Längsnut (26) mehrere laterale Kerben (26a, 26b, 26c) aufweist, die jeweils einer Rastposition entsprechen, und wobei der Hebel (22) des Weiteren lateral beweglich ist, so dass er in einer Kerbe in Eingriff gelangen kann, um in einer Rastposition gesperrt zu werden.

16. Bedienmittel nach einem der Ansprüche 13 bis 15, wobei der Hebel (22) von dem Benutzer hinter (26'c) einer letzten vorbestimmten Rastposition (26b) bewegt werden kann, ohne hinter dieser letzten vorbestimmten Rastposition festgelegt zu werden.

17. Bedienmittel nach einem der Ansprüche 13 bis 16, wobei der Hebel (22) bezüglich der Nut (26) zwischen einer im Wesentlichen vertikalen Position und einer umgeklappten Position lateral beweglich ist, wobei diese Hebel (22) und die Basis (3) jeweils einen Magneten (28a, 29a) aufweisen, wobei diese beiden Magneten so gepolt sind, dass sie sich gegenseitig anziehen, wobei diese beiden Magneten (28a, 29a) miteinander in Kontakt kommen, wenn der Hebel (22) umgeklappt wird, wobei diesen beiden Magneten (28a, 29a) gegenseitige Kontaktflächen mit einem Reibungskoeffizienten aufweisen, der ausreichend hoch ist, den Hebel gegen die Rückstellfeder (25) in Position zu halten, wenn dieser Hebel (22) umgeklappt wird.

18. Bedienmittel nach den Ansprüchen 1 bis 17, **dadurch gekennzeichnet, dass** die Sperrmittel einen Kippstift (31), eine Feder (33), die dazu neigt, diesen Stift (31) in Eingriff in einer Außenverzahnung des Freilaufs (30) zu halten, um ihn zu sperren, und einen Elektromagneten (34) enthalten, der auf den Kippstift (31) gegen die Feder (33) einwirken kann, um den Freilauf (30) freizugeben, indem das Ende des Stifts (31) nur dann aus seiner Außenverzahnung ausgerückt wird, wenn die Zündung des Fahrzeugs eingeschaltet ist.

19. Bedienmittel nach einem der vorhergehenden Ansprüche, **dadurch gekennzeichnet, dass** der Freilauf (30) eine Nabe aufweist, die fest mit dem beweglichen Glied (2) verbunden ist, wobei sich das bewegliche Glied (2) nur dann in Richtung der Verminderung der an die Betätigungsvorrichtungen angelegten Bremskraft drehen kann, wenn der Freilauf (30) freigegeben ist.

20. Bedienmittel nach einem der Ansprüche 1 bis 18, **dadurch gekennzeichnet, dass** der Freilauf (30) eine Nabe aufweist, die fest mit einem Zahnrad (36) verbunden ist, das in eine Zahnstange (35) eingreift und sich entlang der Verschiebungsrichtung dieses Glieds (22) erstreckt, wobei sich die Zahnstange (35) nur dann in der Richtung der Verminderung der an die Betätigungsvorrichtungen angelegten Bremskraft bewegen kann, wenn der Freilauf (30) freigegeben ist.
